# EUROPEAN PATENT APPLICATION

(11) **EP 4 792 657 A1**
(43) Date of publication of application: **19.08.2026**
(21) Application number: 24927601.5
(22) Date of filing: 11.12.2024
(51) Int. Cl.: A23G 9/28, A23G 9/04

(54) **COLD BEVERAGE MACHINE HAVING INFRARED SENSING FUNCTION**

(30) Priority: 29.08.2024 CN 202422120855 U
(71) Applicant: Guangdong Welly Electrical Appliances Co., Ltd., Zhongshan Guangdong 528400 (CN)
(72) Inventor: WU, Xiangan, Zhongshan, Guangdong 528434 (CN); MAI, Linjun, Zhongshan, Guangdong 528434 (CN); MA, Yangyang, Zhongshan, Guangdong 528434 (CN); HU, Wenzhan, Zhongshan, Guangdong 528434 (CN)
(74) Representative: HGF
(86) International application number: PCT/CN2024/138297
(87) International publication number: WO 2026/044995

(57) **Abstract**

Provided is a cold drink machine with an infrared induction. The cold drink machine includes a material-discharging device, an induction device, a refrigeration stirring assembly, and a driving member which are mounted on a machine body. The material-discharging device is provided with a grip. The induction device is disposed corresponding to the grip and is electrically connected to the driving member and is configured to identify a use state of the grip to adjust an operating state of the driving member. The driving member is configured to adjust a stirring speed of the refrigeration stirring assembly. **In** the present application, the induction device works cooperatively with the driving member and the refrigeration stirring assembly, so that the system can start the corresponding working mode only when the material discharge is really required, thereby solving the problem that the taste of the ice cream or the ice slush is deteriorated due to the long-term stirring when the stirring system is always in the continuous operating state even if there is no requirement of the material discharge in the traditional cold drink machine.

## Description

### TECHNICAL FIELD

The present application relates to the technical field of cold drink machines, and in particularly, to a cold drink machine with an infrared induction.

### BACKGROUND

The cold drink machine achieves the efficient heat exchange with the freezing cylinder by continuously stirring raw materials of an ice cream or an ice slush, thereby ensuring that the ice cream or the ice slush can quickly and stably reach the required low-temperature state during the manufacturing process. However, the cold drink machine cannot adjust the stirring speed and the stirring frequency within the cooling machine according to the current working state, so that the cooling machine is always in the continuous operating state.

Long-term stirring will cause the moisture in the raw materials of the ice cream or the ice slush to gradually crystallize into fine ice residue, which not only affects the delicate taste of the ice cream or the ice slush, but also may cause its overall texture to become rough, and thus reduces the eating experience of the consumer. Secondly, the cold drink machine needs to be stirred continuously during the manufacturing process, and the long-term operation of the motor tends to accelerate the aging and abrasion of parts inside the motor, so that the service life of the motor is shortened.

### SUMMARY

In view of the above-described defects, the present application provides a cold drink machine with an infrared induction, the induction device works cooperatively with the driving member and the refrigeration stirring assembly, so that the system can start a corresponding working mode only when a material discharge is really required, thereby solving the problem that the taste of an ice cream or an ice slush is deteriorated due to the long-term stirring when the stirring system is always in a continuous operating state even if there is no requirement of the material discharge in the traditional cold drink machine.

In order to achieve this purpose, the present application adopts the following technical solutions.

A cold drink machine with an infrared induction includes a material-discharging device, an induction device, a refrigeration stirring assembly, and a driving member which are mounted on a machine body. The material-discharging device is provided with a grip. The induction device is disposed corresponding to the grip and is electrically connected to the driving member and is configured to identify a use state of the grip to adjust an operating state of the driving member. The driving member is configured to adjust a stirring speed of the refrigeration stirring assembly.

The induction assembly includes an infrared generator and an infrared receiver, the infrared receiver is electrically connected to the driving member, the infrared generator is configured to emit red light to the grip, and the infrared receiver is configured to receive red light reflected by the grip.

The infrared generator and the infrared receiver are located on two sides of the grip, respectively, and the infrared generator, the infrared receiver and the grip form a triangular structure.

The refrigeration stirring assembly includes a propeller and a freezing cylinder, the propeller is rotatably mounted within the freezing cylinder, the propeller has a length direction consistent with a length direction of the freezing cylinder, and an output end of the driving member is fixedly connected to the propeller.

The material-discharging device further includes a material-discharging tray, the material-discharging tray is configured to seal the freezing cylinder and is provided with a first material-discharging port, the first material-discharging port is in communication with an interior of the freezing cylinder, a bottom of the grip is provided with a transmission assembly and a sealing member, the transmission assembly is configured to connect the grip and the sealing member, and the sealing member is configured to open or close the first material-discharging port.

The transmission assembly includes a first transmission member and a second transmission member, a first hinge point of the grip is rotatably mounted on a top of the first material-discharging port of the material-discharging tray, a second hinge point of the grip is rotatably connected to a top of the first transmission member, a bottom of the first transmission member is connected to a top of a rear side of the second transmission member, and a bottom of the second transmission member is fixedly connected to the sealing member. In an initial state, a connection line direction between the first hinge point and the second hinge point is a horizontal direction.

The transmission assembly further includes a reset torsion spring, the reset torsion spring includes a winding portion and a transmission portion from top to bottom in sequence, the winding portion is wound around the first hinge point of the grip, and the transmission portion is fixedly connected to a front side of the second transmission portion.

The refrigeration stirring assembly further includes a cooling tube, and the cooling tube is disposed around an outer side of the freezing cylinder. The technical solutions of the present application may include the following beneficial effects.
1. The induction device works cooperatively with the driving member and the refrigeration stirring assembly, so that the system can start the corresponding working mode only when the material discharge is really required, thereby solving the problem that the taste of the ice cream or the ice slush is deteriorated due to the long-term stirring when the stirring system is always in the continuous operating state even if there is no requirement of the material discharge in the traditional cold drink machine.
2. The infrared generator and the infrared receiver cooperate with each other, so that whether the current cold drink machine needs to perform the material-discharging operation can be determined accurately, and operating states of the driving member and the refrigeration stirring assembly are corresponding adjusted. By means of the instant response mechanism, the ice cream or the ice slush is pushed out at the optimal opportunity, which not only retains its original flavor and taste, but also avoids the unnecessary energy waste.

### BRIEF DESCRIPTION OF THE DRAWINGS

FIG. 1 is a schematic view of a cold drink machine according to an embodiment of the present application;
FIG. 2 is an enlarged view of part A of FIG. 1;
FIG. 3 is an exploded view of a cold drink machine according to an embodiment of the present application; and
FIG. 4 is an exploded view of a transmission assembly and a grip according to an embodiment of the present application.

### List of reference numbers

- 1: machine body
- 2: material-discharging device
- 21: grip
- 22: material-discharging tray
- 23: transmission assembly
- 24: sealing member
- 25: first transmission member
- 26: second transmission member
- 27: reset torsion spring
- 3: induction device
- 31: infrared generator
- 32: infrared receiver
- 4: refrigeration stirring assembly
- 41: propeller
- 42: freezing cylinder

### DETAILED DESCRIPTION

The technical solutions of the present application will be further described below in conjunction with the accompanying drawings and specific embodiments.

In the description of the present application, it is to be understood that orientations or position relations indicated by terms "length," "center," "upper," "lower," "left," "right," "top," "bottom," and the like are orientations or position relations indicated in the accompanying drawings. These orientations or position relations are intended merely to facilitate and simplify the description of the present application and not to indicate or imply that a device or element referred to must have such particular orientations or must be configured or operated in such particular orientations, and thus are not to be construed as limiting the present application.

In addition, terms "first", "second" are used only for the purpose of description and are not to be construed as indicating or implying relative importance or implicitly indicating a number of indicated technical features. Thus, a feature defined with "first" or "second" may explicitly or implicitly includes one or more of the features. In the description of the present application, unless otherwise specified, "multiple" means two or more.

In the description of the present application, it is to be noted that terms "mounted", "joined" and "connected" are to be understood in a broad sense unless otherwise expressly specified and limited. For example, the term "connected" may refer to "fixedly connected" or "detachably connected" or "integrally connected", may refer to "connected directly", "connected indirectly through an intermediary" or "connected inside two components". For those of ordinary skill in the art, specific meanings of the preceding terms in the present application may be understood based on specific situations.

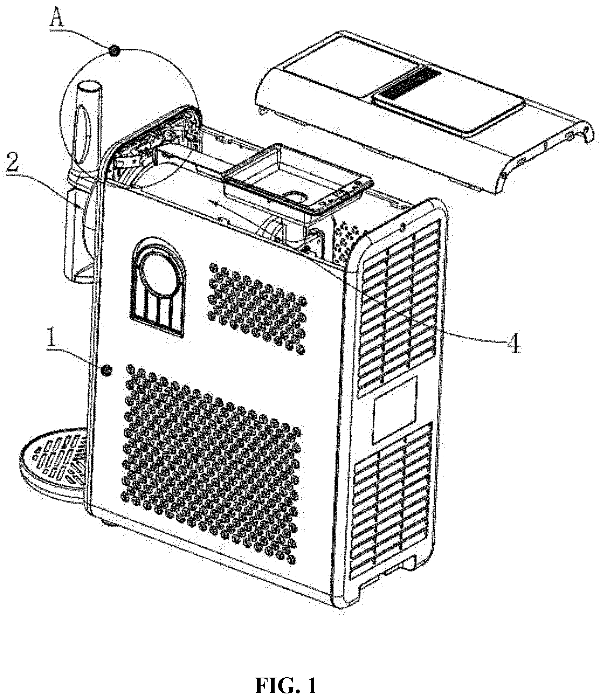

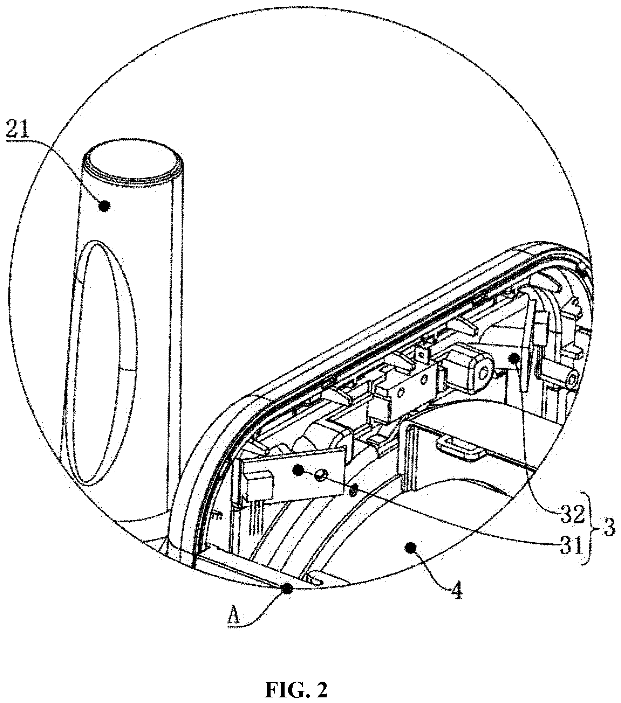

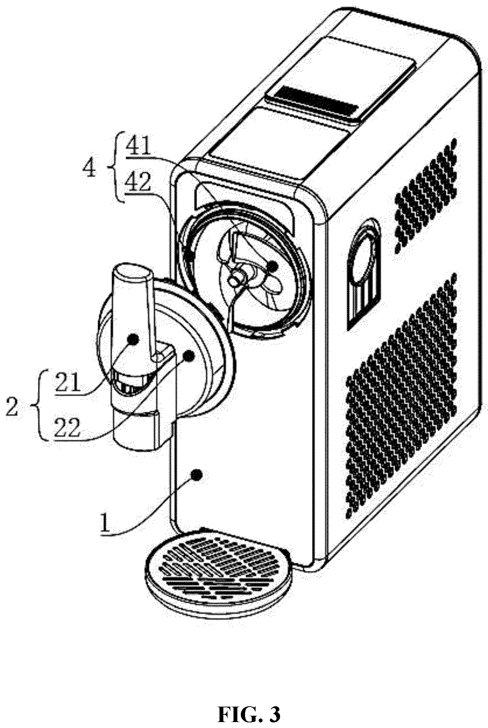

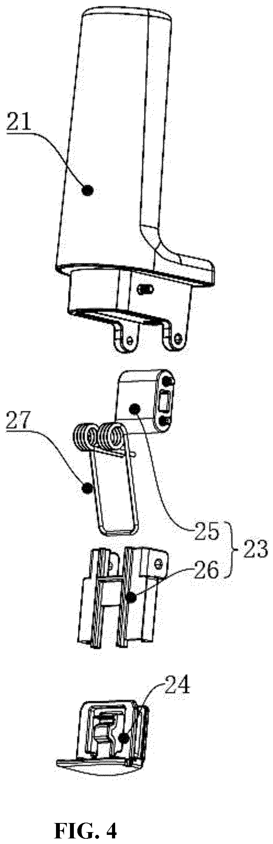

A cold drink machine with an infrared induction according to an embodiment of the present application will be described below with reference to FIG. 1 to FIG. 5.

A cold drink machine with an infrared induction includes a material-discharging device 2, an induction device 3, a refrigeration stirring assembly 4 and a driving member which are mounted on a machine body 1. The material-discharging device 2 is provided with a grip 21. The induction device 3 is disposed corresponding to the grip 21 and is electrically connected to the driving member and is configured to identify a use state of the grip 21 to adjust an operating state of the driving member. The driving member is configured to adjust a stirring speed of the refrigeration stirring assembly 4.

An operation process of the cold drink machine with the infrared induction in this solution is as follows. When a worker naturally holds or slightly swings the grip 21 downwards, the induction device 3 captures a motion moment and identifies it as a material-discharging request. Thereupon, the induction device 3 adjusts the operating state of the driving member, and enhances the stirring speed of the refrigeration stirring assembly 4, to ensure that an ice cream or an ice slush is uniformly and finely pushed out in an optimal state, which not only retains the original creamy and smooth taste of the ice cream or the ice slush, but also ensures that each mouth of the ice cream or the ice slush can achieve the optimal flavor and taste.

When the worker loosens the grip 21, after the induction assembly identifies that the grip 21 is in an initial state, the induction assembly adjusts the operating state of the driving member to reduce the stirring speed of the refrigeration stirring assembly 4, thereby avoiding the ice cream or the ice slush from changing texture or generating ice crystals due to excessive stirring and excessive refrigeration, and further ensuring the taste and the flavor of the ice cream or the ice slush.

In the present application, the induction device 3 works cooperatively with the driving member and the refrigeration stirring assembly 4, so that the system can start a corresponding working mode only when a material discharge is really required, thereby solving the problem that the taste of the ice cream or the ice slush is deteriorated due to the long-term stirring when the stirring system is always in a continuous operating state even if there is no requirement of the material discharge in the traditional cold drink machine.

The induction assembly includes an infrared generator 31 and an infrared receiver 32. The infrared receiver 32 is electrically connected to the driving member. The infrared generator 31 is configured to emit red light to the grip 21, and the infrared receiver 32 is configured to receive red light reflected by the grip 21.

The infrared generator 31 accurately emits the red light, if the worker grips the grip 21 or swings the grip 21 downwards, the red light cannot be irradiated on the grip 21 and is reflected, so that the infrared receiver 32 cannot receive the red light reflected by the grip 21. Then, the induction device 3 adjusts the operating state of the driving member according to the signal, to enhance the stirring speed of the refrigeration stirring assembly 4.

If the worker releases the grip 21 and the grip 21 is in an initial state, then the infrared generator 31 is capable of emitting infrared light onto the grip 21, and the grip 21 reflects the light, so that the infrared receiver 32 is capable of receiving the reflected red light. In this case, the infrared receiver 32 may adjust the operating state of the driving member according to the signal, thereby reducing the stirring speed of the refrigeration stirring assembly 4 and reducing the refrigeration power.

Therefore, the infrared generator 31 and the infrared receiver 32 cooperate with each other, so that whether the current cold drink machine needs to perform the material-discharging operation can be determined accurately, and operating states of the driving member and the refrigeration stirring assembly 4 are correspondingly adjusted. By means of the instant response mechanism, the ice cream or the ice slush is pushed out at the optimal opportunity, which not only retains its original flavor and taste, but also avoids the unnecessary energy waste.

The infrared generator 31 and the infrared receiver 32 are located on two sides of the grip 21, respectively, and the infrared generator 31, the infrared receiver 32 and the grip 21 form a triangular structure.

In this solution, positions of the infrared generator 31 and the infrared receiver 32 are limited, so that the infrared generator 31 is capable of emitting infrared light to the grip 21 when the cold drink machine is in a non-operating state, even if the cold drink machine is vibrated under the action of the outside, and the infrared receiver 32 is capable of receiving infrared light reflected by the grip 21, thereby ensuring the stability and the reliability of the cold drink machine.

Moreover, when the worker grips the grip 21 or the grip 21 is inclined downwards for the material discharge, the design of the triangular structure can ensure that the infrared receiver 32 cannot receive the red light from the infrared generator 31, thereby improving the accuracy of the operation of the cold drink machine.

The refrigeration stirring assembly 4 includes a propeller 41 and a freezing cylinder 42. The propeller 41 is rotatably mounted within the freezing cylinder 42, a length direction of the propeller 41 is consistent with a length direction of the freezing cylinder 42, and an output end of the driving member is fixedly connected to the propeller 41.

The freezing cylinder 42 has excellent freezing performance and may provide a solid foundation for the rapid solidification of the ice cream or the ice slush. When the propeller 41 stirs the cold drink, a blade of the propeller 41 comes into contact with an inner wall of the freezing cylinder 42, so that a heat conduction process occurs between the ice cream or the ice slush and the freezing cylinder 42, thereby achieving the refrigeration effect.

When the ice cream or the ice slush is in a material-discharging state, the driving member accelerates a rotation speed of the propeller 41, so that the ice cream or the ice slush can be stably and outwards conveyed by the cold drink machine, the blade can be frequently contacted with the inner wall of the freezing cylinder 42, and the heat exchange area between the ice cream or the ice slush and the freezing cylinder 42 is significantly increased, whereby the heat release inside the ice cream or the ice slush is remarkably accelerated, the overall refrigeration efficiency is improved, and the ice cream or the ice slush may keep ideal taste and flavor during the material discharge.

The material-discharging device 2 further includes a material-discharging tray 22 for sealing the freezing cylinder 42. The material-discharging tray 22 is provided with a first material-discharging port. The first material-discharging port is in communication with an exterior of the freezing cylinder 42. A bottom of the grip 21 is provided with a transmission assembly 23 and a sealing member 24. The transmission assembly 23 is connected to the grip 21 and the sealing member 24. The sealing member 24 is configured to open or close the first material-discharging port.

The grip 21 is swung downwards, and the grip 21 sequentially drives the transmission assembly 23 and the sealing member 24 to move, so that the sealing member 24 opens the first material-discharging port. In this case, the induction device 3 induces the use state of the grip 21 at this time and timely adjusts a rotation speed of the driving member, so that the propeller 41 can quickly stir the ice cream or the ice slush, whereby the ice cream or the ice slush not only can maintain the better taste and flavor, but also can discharge the material stably.

When the worker releases the grip 21, the induction device 3 may quickly identify that the grip 21 has reset to an original position and may adjust the rotation speed of the driving member according to this, so that the propeller 41 slowly and intermittently stirs the ice cream or the ice slush, whereby a situation that the taste of the ice cream or the ice slush is deteriorated due to the long-term stirring is reduced.

It is worth noting that the sealing member 24 is preferably a food grade rubber material. The sealing member 24 closely fits the first material-discharging port, thereby ensuring that raw materials of the ice cream or the ice slush are completely enclosed within the freezing cylinder 42 when the material discharge is not performed, and avoiding the leakage or deterioration of the ice cream or the ice slush caused by the intight sealing.

The transmission assembly 23 includes a first transmission member 25 and a second transmission member 26, a first hinge point of the grip 21 is rotatably mounted on a top of the first material-discharging port of the material-discharging tray 22, a second hinge point of the grip 21 is rotatably connected to a top of the first transmission member 25, a bottom of the first transmission member 25 is connected to a top of a rear side of the second transmission member 26, and a bottom of the second transmission member 26 is fixedly connected to the sealing member 24. In an initial state, a connection line direction between the first hinge point and the second hinge point is a horizontal direction.

In this solution, the connection line direction of the first hinge point and the second hinge point of the grip 21 is defined, it can be effectively ensured that when the grip 21 is swung outwards, the grip 21 can sequentially drive the first transmission member 25 and the second transmission member 26 to move, so that the bottom of the second transmission member 26 drives the sealing member 24 to move, the sealing member 24 may open the first material-discharging port, and the ice cream or the ice slush is extruded from the freezing cylinder 42 to the first material-discharging port, whereby the material discharge of the ice cream or the ice slush is completed.

The grip 21 is swung inwards, and the grip 21 can sequentially drive the first transmission member 25, the second transmission member 26 and the sealing member 24 to move, so that the sealing member 24 seals the first material-discharging port, and the material discharge of the ice cream or the ice slush is stopped.

Through the cascade design of the first transmission member 25 and the second transmission member 26, a stable transmission chain is formed. This design not only enhances the stability of the transmission, but also makes the movement of the sealing member 24 during the opening and closing process more smooth and accurate.

The transmission assembly 23 further includes a reset torsion spring 27, the reset torsion spring 27 sequentially includes a winding portion and a transmission portion from top to bottom, the winding portion is wound around the first hinge point of the grip 21, and the transmission portion is fixedly connected to a front side of the second transmission member 26.

When the grip 21 is swung outwards, a rear end of the grip 21 is tilted upwards, so that the first transmission member 25 may move upwards, thereby driving the rear side of the second transmission member 26 to move upwards. Moreover, the reset torsion spring 27 is deformed under the action of the grip 21, and the transmission portion drives the front side of the second transmission member 26 to move upwards. In this case, both the front side and the rear side of the second transmission member 26 are subjected to an upward force, so that the second transmission member 26 drives the sealing member 24 to move upwards together, thereby ensuring that the sealing member 24 opens a second material-discharging port.

When the worker releases the grip 21 and the grip 21 returns to its original position, the reset torsion spring 27 is reset, and the first transmission member 25 moves downwards under the action of the grip 21, so that the second transmission member 26 moves downwards under the action of the reset torsion spring 27 and the first transmission member 25, thereby driving the sealing member 24 to move downwards and closing the second material-discharging port.

The refrigeration stirring assembly 4 further includes a cooling tube, and the cooling tube ring is disposed around an outer side of the freezing cylinder 42. When the propeller 41 within the freezing cylinder 42 stirs the raw materials of the ice cream or the ice slush, the cooling tube works simultaneously, the heat of an outer wall of the freezing cylinder 42 is quickly taken away by means of the principle of heat conduction, thereby accelerating the cooling and solidification process of the raw materials of the ice cream or the ice slush. By means of the internal and external combined refrigeration mode, the whole refrigeration efficiency is significantly improved, and the manufacturing period of the ice cream or the ice slush is shortened.

Moreover, the cooling tubes are arranged around the outer side of the freezing cylinder 42, so that all parts of the freezing cylinder 42 can uniformly receive the cooling effect. By means of this design, the difference in the texture of the ice cream or the ice slush caused by the uneven temperature distribution inside the freezing cylinder 42 is avoided, and the consistency of the quality and the taste of the finished product of the ice cream or the ice slush is ensured.

The technical principles of the present application have been described above in conjunction with specific embodiments. The description is made for the purpose of illustrating the principles of the present application and should not be taken in any way as limiting the scope of protection of the present application. Based on the explanations herein, those skilled in the art will be able to conceive of other specific embodiments of the present application without inventive step, and these embodiments shall fall within the scope of protection of the present application.

## Claims

1. A cold drink machine with an infrared induction, comprising a material-discharging device, an induction device, a refrigeration stirring assembly, and a driving member which are mounted on a machine body, wherein the material-discharging device is provided with a grip, the induction device is disposed corresponding to the grip and is electrically connected to the driving member and is configured to identify a use state of the grip to adjust an operating state of the driving member, and the driving member is configured to adjust a stirring speed of the refrigeration stirring assembly.

2. The cold drink machine with an infrared induction of claim 1, wherein the induction assembly comprises an infrared generator and an infrared receiver, the infrared receiver is electrically connected to the driving member, the infrared generator is configured to emit red light to the grip, and the infrared receiver is configured to receive red light reflected by the grip.

3. The cold drink machine with an infrared induction of claim 2, wherein the infrared generator and the infrared receiver are located on two sides of the grip, respectively, and the infrared generator, the infrared receiver and the grip form a triangular structure.

4. The cold drink machine with an infrared induction of claim 1, wherein the refrigeration stirring assembly comprises a propeller and a freezing cylinder, the propeller is rotatably mounted within the freezing cylinder, the propeller has a length direction consistent with a length direction of the freezing cylinder, and an output end of the driving member is fixedly connected to the propeller.

5. The cold drink machine with an infrared induction of claim 4, wherein the material-discharging device further comprises a material-discharging tray, the material-discharging tray is configured to seal the freezing cylinder and is provided with a first material-discharging port, the first material-discharging port is in communication with an interior of the freezing cylinder, a bottom of the grip is provided with a transmission assembly and a sealing member, the transmission assembly is configured to connect the grip and the sealing member, and the sealing member is configured to open or close the first material-discharging port.

6. The cold drink machine with an infrared induction of claim 5, wherein the transmission assembly comprises a first transmission member and a second transmission member, a first hinge point of the grip is rotatably mounted on a top of the first material-discharging port of the material-discharging tray, a second hinge point of the grip is rotatably connected to a top of the first transmission member, a bottom of the first transmission member is connected to a top of a rear side of the second transmission member, and a bottom of the second transmission member is fixedly connected to the sealing member; and
in an initial state, a connection line direction between the first hinge point and the second hinge point is a horizontal direction.

7. The cold drink machine with an infrared induction of claim 6, wherein the transmission assembly further comprises a reset torsion spring, the reset torsion spring comprises a winding portion and a transmission portion from top to bottom in sequence, the winding portion is wound around the first hinge point of the grip, and the transmission portion is fixedly connected to a front side of the second transmission portion.

8. The cold drink machine with an infrared induction of claim 1, wherein the refrigeration stirring assembly further comprises a cooling tube, and the cooling tube is disposed around an outer side of the freezing cylinder.
